Europäisches Patentamt

(19) European Patent Office

Office européen des brevets

(11) Publication number: **0 068 052**
**B1**

# (12) EUROPEAN PATENT SPECIFICATION

(45) Date of publication of patent specification: **12.11.86**

(21) Application number: **81302952.7**

(22) Date of filing: **29.06.81**

(51) Int. Cl.⁴: **G 01 S 7/62,** G 01 S 15/89,
G 10 K 11/34

(54) **Ultrasonic imaging apparatus and method.**

(43) Date of publication of application:
**05.01.83 Bulletin 83/01**

(45) Publication of the grant of the patent:
**12.11.86 Bulletin 86/46**

(84) Designated Contracting States:
**DE FR GB IT NL**

(56) References cited:
**FR-A-2 310 608**
**US-A-3 889 227**
**US-A-4 011 750**
**US-A-4 252 026**
**US-A-4 254 662**
**US-A-4 267 584**

**NAVY TECHNICAL DISCLOSURE BULLETIN,
vol. 5, no. 7, July 1980, OFFICE of NAVAL
RESEARCH, Arlington VA, US JACKSON and
MORAVAN: "Acoustic Imaging by Spatial
Correlation", pages 39-44**

(73) Proprietor: **International Business Machines
Corporation**
**Old Orchard Road**
**Armonk, N.Y. 10504 (US)**

(72) Inventor: **Miessler, Milan Herman**
**Bracken Cottage Potters Heron Lane**
**Ampfield Romsey Hampshire (GB)**

(74) Representative: **Bailey, Geoffrey Alan**
**IBM United Kingdom Limited Intellectual
Property Department Hursley Park
Winchester Hampshire SO21 2JN (GB)**

## Description

Introduction

The invention relates to ultrasonic imaging apparatus and method and, in particular but not exclusively, to apparatus and method for use in medical investigations and diagnosis.

Extensive research into real time ultrasonic imaging systems for use in medical diagnosis in the field of obstetrics, ophthalmology and internal medicine has led to the development of a variety of devices performing a variety of imaging techniques. One form of such apparatus utilises an ultrasonic probe, incorporating an array of ultrasonic transducers, which, in use is placed in contact with a patient's body and selected transducers energised to transmit ultrasound into the body. The ultrasound is reflected from acoustic impedance discontinuities within the body and the echoes are detected and converted by the transducers to electric echo signals. The time delays between the transmission of each ultrasonic pulse into the body and receipt of the echoes of that pulse are proportional to the distances from the various transducers to the discontinuities within the body producing the echoes. In practice a plurality of transducers are used in a controlled manner to transmit and receive echoes of ultrasound and the resulting electric echo signals processed to construct a cross-sectional image of the body which is displayed on a cathode ray tube.

The number and size of the transducer elements in the array are determined having regard to the design requirements needed for the specific application. The pattern of energisation is selected to provide a beam of required characteristics for the application. Thus, for example a linear array of transducers may be used, the angle of incidence of the beam being determined by the phase relationship between the energised elements in the array. In addition to beam steering, the intensity of sound may be enhanced in a selected direction from the center of a linear array of transducers by phasing the transmission times from individual transmitting transducers. The received echoes are subsequently electronically focussed by reverse phasing of the received signals. This method suffers inevitably from random echoes caused by 'sidelobes' of the transmitted soundwaves.

As an alternative to beam steering, the transducers in a linear array may be energised simultaneously, a group at a time, to achieve homogeneity of the wave and the received echoes routed through selected delay lines, thus achieving a measure of electronic focussing. This method suffers from echo artefacts due to the large area being insonified, and by the fact that delay lines provide only one part of the time transformation necessary for exact focussing.

US—A—4011750 discloses apparatus for the ultrasonic examination of an object and in one embodiment employs a single transmitting and a plurality of receiving transducers. Time transform operation are performed on the received waveforms to refer them to a notional focus line on the axis of the central transducer.

The apparatus of the present invention differs from the above prior art in that only one transducer of a linear array of transducers is energised at a time to produce a narrow pulsed beam of ultrasound into the body. Echoes of the pulse are received by a predetermined number of the transducers, converted to electric signals, digitised and stored in a digital memory. The stored signals relating to each pulse are subsequently read out from memory; transformed in the time domain to compensate for different propagation times of the echoes from the different reflection points in the body; and combined to produce image information which is used to modulate the intensity of the scanning beam of a CRT display device. An important feature of the invention is that several unique scan lines of an image may be created in this way from the echo information derived from each individual pulse transmitted into the body. This process is repeated for each of the sequence of input pulses from the transducers resulting in a cross-sectional image through the scanned portion of the body of considerably improved resolution. Uninterrupted output to the CRT display is achieved by utilising two banks of memories, one of which is used to store digitised echo information whilst echo information previously stored in the other is being processed.

In order that the invention may be fully understood, a preferred embodiment thereof will now be described with reference to the accompanying drawings.

In the drawings:

Figure 1 shows a probe consisting of a linear array of ultrasonic transducer elements used to transmit pulses of ultrasound into a body and to receive echoes of the pulses reflected from within the body;

Figure 2 shows the electrical connections to the probe shown in Figure 1 for focussing the received echoes in the longitudinal plane of symmetry of the probe;

Figures 3 and 4 show the timed relationship between echo signals received by different receiver pairs in the probe following a single pulse of sound injected into a body along a predetermined focus line having reflecting surfaces regularly spaced through the body;

Figures 5 through 10 illustrate a time transformation and correlation process on echo signals received by different receiver pairs following a single pulse of sound injected into the body in order to focus the echo information in a direction transverse to the longitudinal plane of symmetry of the probe;

Figure 11 shows as a schematic block diagram one form of apparatus according to the present invention;

Figure 12 shows a detail of part of the apparatus shown in Figure 11; and

Figure 13 shows the relationship of read-out frequency to distance into the body along a focus line for various receiver pair off-sets from the focus line.

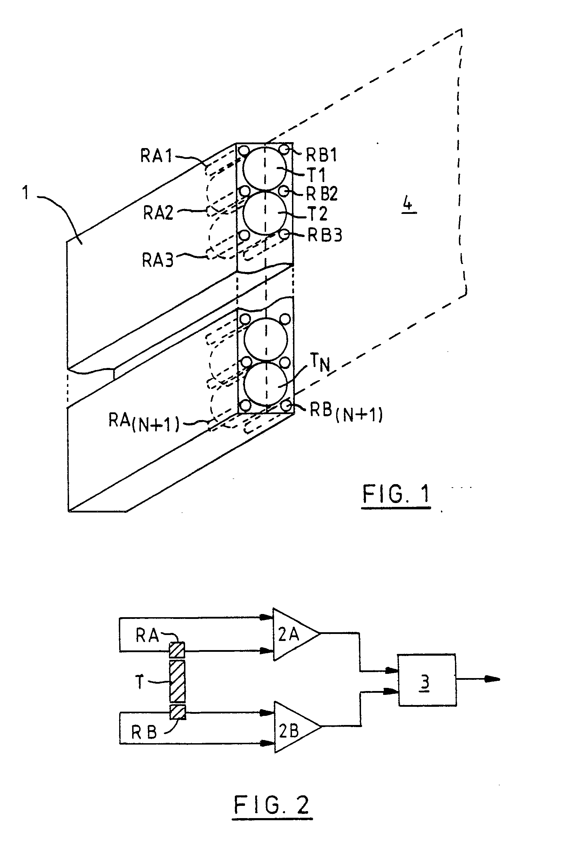

In the ultrasonic imaging apparatus in accordance with the present invention, ultrasound is transmitted into a body under investigation by means of a probe consisting of a linear array of ultrasonic transducers. The preferred form of the linear array is shown in Figure 1 and is as described and claimed in our co-pending European Patent Application No. 81302953.5 filed on even date, granted as Patent No. EP—B—68053. Briefly, the probe 1 consists of a row of piezoelectric transmitters T1 to TN positioned between two parallel rows of piezoelectric receivers RA1 to RA(N + 1) and RB1 to RB(N + 1) respectively. The transmitters T are constructed with a relatively larger diameter than that of the receivers RA, RB in order to generate when energised a fairly directional sound wave travelling along a substantially parallel beam. The smaller receivers are conveniently located on each side of the array one in each of the two available gaps between adjacent transmitters. Correspondingly positioned receivers in the two rows are regarded as constituting pairs of receivers (RA2, RB2), (RA3, RB3) etc. A further pair of receivers is provided at each end of the array thereby making maximum use of the available space.

The arrangement for deriving an electric echo signal from the echoes detected by the individual receivers in a pair of receivers RA, RB is shown in Figure 2. Here, each receiver RA and RB is connected to a respective differential amplifier 2A and 2B. The outputs from the two amplifiers are connected as inputs to analogue multiplier 3. The multiplication of the individual echo signals received by the two receivers emphasises the parts of the signal common to both receivers. Since each pair of receivers is symmetrically positioned on each side of the row of transmitters, the output signals received from the multipliers represent echoes received of reflections only from objects lying in the longitudinal plane of symmetry 4 (Figure 1) of the linear array of transducers. Focussing of the echo signals into the plane of the common longitudinal axes of the transmitters is therefore automatically achieved. This plane of symmetry will hereinafter be referred to as the scan plane 4.

The signals produced by each pair of receivers represent the echoes received from all reflecting points within the body under investigation lying in the scan plane 4. In other words, echo information generated by the probe contains all the information necessary to generate an image of the internal structure of a cross-section through the body. Each pair of receivers produces a similar pattern or waveform of signals representing all echoes received. However, the time of occurrence of the individual signals in each echo signal waveform is determined by the relative distance travelled through the body by the ultrasonic pulses from transmitter to receiver. The time taken for an echo to be received depends therefore on the distance from the transmitter to the reflecting surface within the body, and the distance from the reflecting surface to the pair of receivers in question. This latter distance is itself affected by the distance of the pair of receivers from the transmitter. The fact that echoes from the same point on a reflecting surface within the body may be received at different times by different pairs of receivers is used to focus the ultrasound within the scan plane 4. In practice, the echo signals received by the receiver pairs are used to detect reflecting surfaces within the body along a selected straight line extending into the body parallel to the longitudinal axis of the energised transmitter and lying in the scan plane 4. These selected lines will hereinafter be referred to as focus lines.

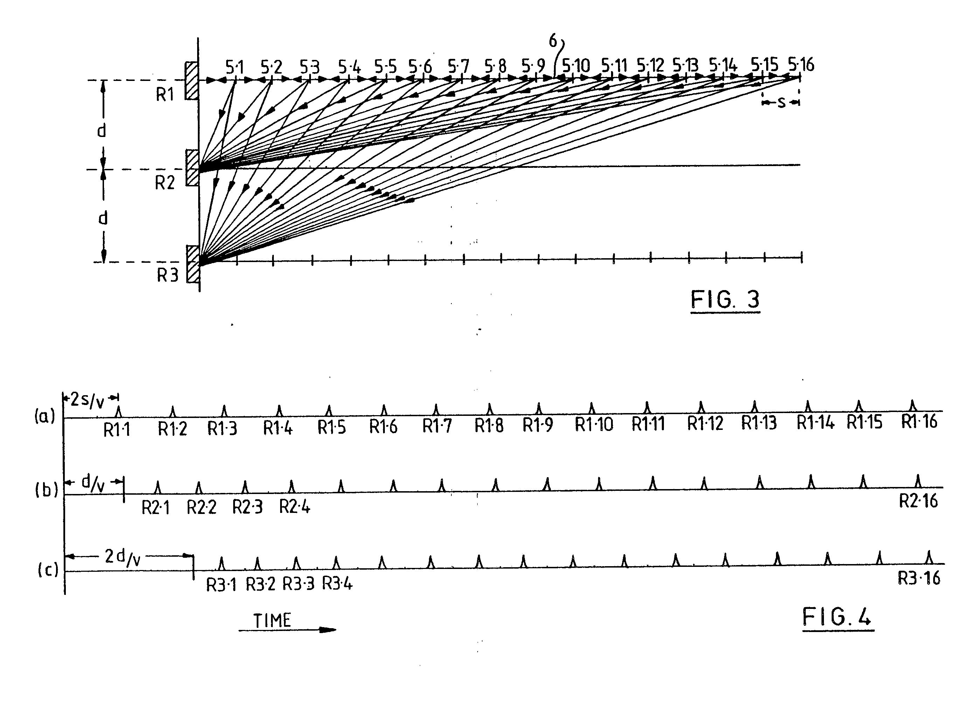

The timed relationship between the echo signals received by different pairs of receivers is illustrated with reference to Figures 3 and 4. In Figure 3 a single pulse of ultrasound injected into a body from a transmitter (not shown) is reflected from a number of uniformly spaced reflecting surfaces 5.1 to 5.16 within the body and the echoes from the surfaces received by the three pair of uniformly spaced receivers R1, R2 and R3 in contact with the body (only one receiver of the pair can be seen in the figure). The reflecting surfaces in this example are assumed to be small points spaced from each other by a constant distance s along a straight line 6 normal to the surface of the body. In this example, the line 6 is selected as the focus line. One pair of receivers R1 is located on the focus line 6 and the other two pairs R2 and R3 are displaced from the line by distances d and 2d respectively. The paths of the reflected sound waves from the reflecting surfaces to the receiver pairs are shown in the figure.

The echo signals generated by the three pairs of receivers R1, R2 and R3 as the echoes are received from within the body are shown in Figure 4 as waveforms (a), (b) and (c) respectively. For the sake of clarity, the echo signals generated by pair of receivers R1 from echoes received from the reflecting points 5.1, 5.2, ... 5.16 are shown in waveform (a) as corresponding signals R1.1, R1.2, ... R1.16 respectively. Similarly, the echo signals generated by receivers R2 are shown in waveform (b) as signals R2.1, R2.2, ... R2.16 respectively, and the echo signals generated by receivers R3 in waveform (c) as R3.1, R3.2, ... R3.16 respectively. Since receivers R1 lie on the focus line 6, the echoes are received at a regularly occurring rate, each spaced by an interval of time (2s/v), where v is the velocity of sound through the body under investigation.

Since receiver R2 is laterally displaced from line 6 by distance d, there is an initial time lapse td = (d/v) following transmission of the incident pulse into the body during which time no echoes can reach this receiver. Following this initial delay, the echoes from the reflecting surfaces 5.1, 5.2, ... 5.16 are received initially at a faster rate than those received by receiver pair R1, but progressively slowing as the incident beam penetrates the body until the rate is substantially identical to the constant rate of waveform (a). The echo signals R2.1, R2.2, ... R.16 generated by receiver pair R2 are shown in waveform (b) Figure 4 which also includes on the same time scale the initial delay (d/v) caused by the physical displacement of the receiver pair R2 from the transmitter T.

Receiver pair R3 is spaced from line 6 by distance 2d and accordingly there is a time lapse of td = (2d/v) following transmission of the incident pulse into the body, during which time no echoes can reach this receiver pair. Following this initial delay, the sound waves from the reflecting surfaces are received as a series of echoes, initially at an even faster rate than in the previous examples, but progressively slowing until the rate is substantially equal to that for receivers R1. The signals R3.1, R3.2, ... R3.16 generated by receiver pair R3 in response to receipt of these echoes are shown in waveform (c). The initial time delay td = (2d/v) caused by the positional displacement of the receiver pair R3 with respect to the transmitter is also shown on the same time scale. Clearly, the greater the displacement of the receiver from transmitter, the greater is the initial delay td and the higher the initial rate of echoes received from reflecting surfaces close to the surface of the body into which the transmitter pulses are injected.

The variation in timing of the echoes received by the receiver pairs is due entirely to the geometric relationship between the transmitter; the various receiver pairs; and the reflecting surfaces within the body in the path of the incident beam. Given the distance between a selected focal line and the associated pairs of receivers, and the location of the various reflecting surfaces along the focal line, echo signal waveforms such as shown in Figure 4 can readily be constructed following geometric calculation. Equally, as will be explained hereinafter, given the distance between focal line and associated receiver pairs and the resulting echo signal waveforms detected by more than one receiver pair, the location of the reflecting surfaces within the body in the focussed plane 4 can also be determined.

The example given above with respect to Figures 3 and 4, although serving the purpose of explanation, is unrealistic in that it is an oversimplification of the practical case. In practice, the transmitted pulse beam has a finite width and echoes are received from all portions of all reflecting surfaces which are intercepted by the beam. It can be seen therefore that the echo information received by one pair of receivers alone is ambiguous due to the fact that the direction of the individual echo pulses are unknown. However, provided the patterns of echoes from a transmitted pulse are received by more than one pair of receivers, it is possible to ascertain the precise locations of the reflecting surfaces within the body causing the echoes.

The technique devised in accordance with the present invention involves performing a time transformation on the series of echo signals generated by those receiver pairs offset from the selected focus line and correllating the resulting time transformed echo signals. Where a receiver pair is precisely aligned with the selected focus line, there is no geometric distortion and time transformation of the resulting echo signals is not required before correlation.

The time transformation of the echo signals is performed in two stages. The first stage involves a simple time shift of the entire echo signal waveform in order to eliminate any initial time delay td resulting from physical off-set of a receiver pair from the selected focus line. The second stage involves modifying the various echo signal waveforms so that thereafter the corresponding echo signals from the same reflecting points along the selected focus line are converted to the same linear time scale for all receiver pairs. In other words, those echo signals in an echo signal waveform from one receiver pair representing echoes from reflecting entities along a selected focus line occur at the same points in time as corresponding echo signals, in the waveforms from the other receiver pairs. All other echo signals received from entities not on the selected line will, in general, not be coincident in time after this time transformation. Accordingly, the correlation of the echo signal waveforms generated by two or more receiver pairs, having first been time transformed if the receiver pair is off-set from the selected focus line, results in the time coincident echo signals being reinforced making them clearly distinguishable from the remaining spurious and unwanted echo signals which are largely eliminated. The resulting relatively large amplitude signals represent by their time of occurrence the relative positions of reflecting entities within the body along the selected focus line.

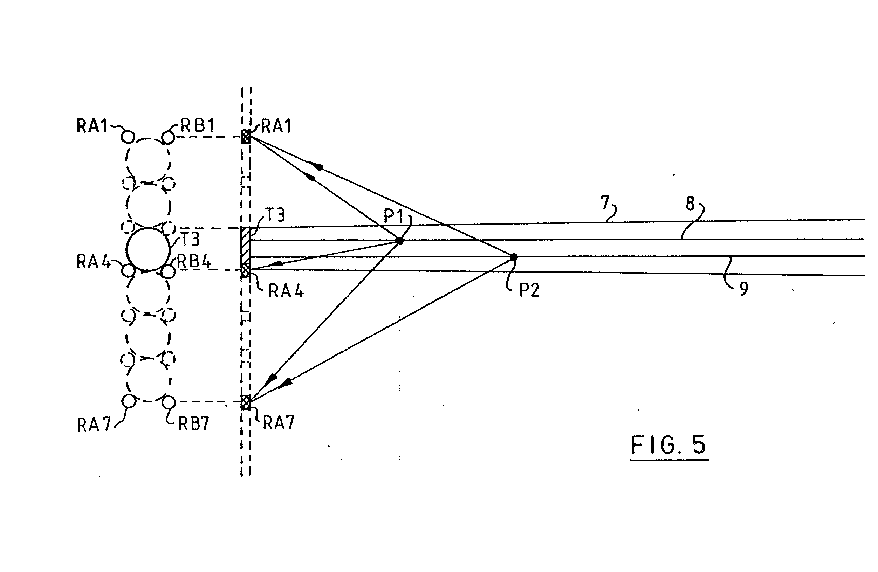

The transformation and correlation process is explained in more detail with reference to Figures 5, 6, 7, 8, 9 and 10 hereinafter. Figure 5 shows the probe with transmitter T3 selected for energisation and three pairs of receivers RA1, RB1; RA4, RB4; and RA7, RB7 selected to generate echo signals corresponding to detected echoes. In this example, one receiver pair is closely adjacent the transmitter and the other two distantly spaced by different amounts. The transmitter, when energised, injects an ultrasonic pulse into the body along a path substantially parallel to the longitudinal axis of the transmitter. The resultant pulse beam 7 is substantially parallel and of width initially defined by the transmitting area of the transmitter T. For the purpose of this explanation, two reflecting points P1 and P2, located within the body at different depths and laterally displaced from each other with respect to the beam width, will be considered. The points P1 and P2 lie in the path of the incident beam and therefore generate echoes which will be detected by the three receiver pairs.

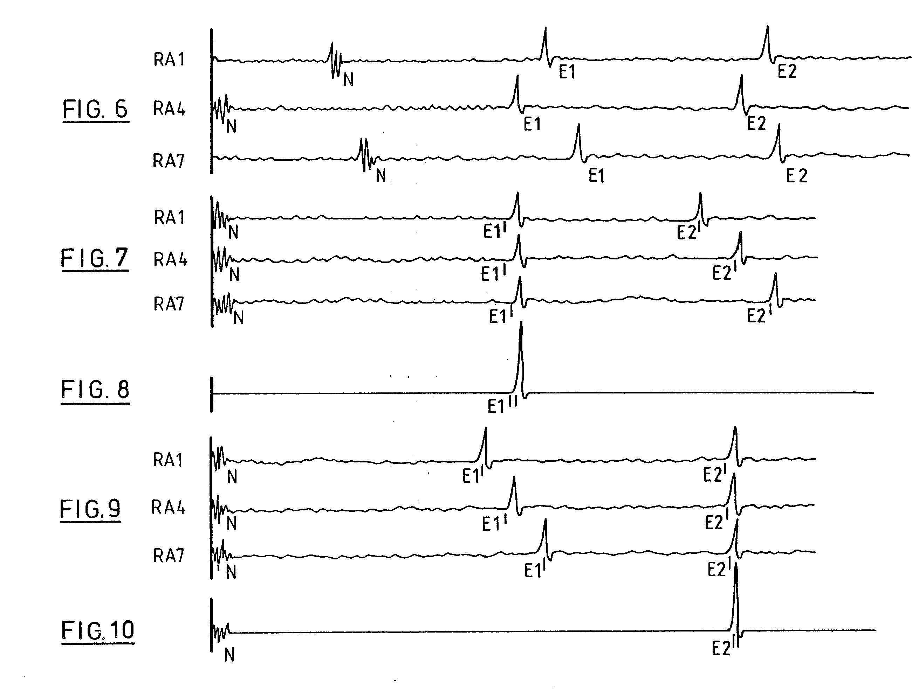

Figure 6 shows the echo signal waveforms generated by one received RAn in each of the three receiver pairs RA1, RB1; RA4, RB4; and RA7, RB7 in response to a single pulse injected into the body. Each echo signal waveform includes two echo signals E1 and E2 corresponding to the echoes of the input pulse from the points P1 and P2 respectively. The timing of these echo signals is determined by the relative distances from the points P1 and P2 from the transmitter and to the respective receiver pair. In addition to the echo signals E1 and E2, each signal waveform includes a noise pulse N derived directly from the transmitted pulse resulting from the physical distance separating that receiver pair from the transmitter. In the following two examples the interior structure of the body will be investigated along two focus lines.

In the first example, a focus line 8 is selected which happens to pass through reflecting point P1. Figure 7 shows the echo signal waveforms respectively generated by the three receiver pairs after time transformation with respect to the focus line 8. The nature of the time transform will be described in detail hereinafter. By comparison with the pre-transformed waveforms in Figure 6 it is seen that firstly the echo signal waveforms have been advanced in time by an appropriate amount dependent upon the relative distance of the receiver pairs from the focus line 8 so that all three noise signals N become time coincident. Secondly, the timing of the individual echo signals in each echo signal waveform has been modified to put them on the same linear time scale with respect to the selected focus line 8. The three echo signals E1, emanating from the simple point P1 are the only echo signals associated with focus line 8, and are made coincident in time by the transform process. The three echo signals resulting from the three detected echoes from point P2, are not associated with the focus line 8 and although re-positioned by the time transform process, remain displaced in time. The re-positioned echo signals are shown in Figure 7 as E1' and E2'. Correlation of these three time transformed signal waveforms by multiplication produces a large intensity signal representing the three time coincident signals E1'. The remaining signals generally having been multiplied by near-zero amplitude signals on one or other of the two remaining waveforms are largely eliminated. The resulting large amplitude correlated signal is shown as signal E1'' in Figure 8. The time of occurrence of the correlated output signal E1'' indicates the location of the reflecting point P1 along the selected focus line 8.

By selecting different focus lines and performing time transforms appropriate to those lines, the location of other reflecting surfaces within the body lying on the lines can be detected. In the second example, focus line 9 is selected which happens to pass through reflecting point P2. Since the distances between the receiver pairs and the selected line have changed from the previous example, the initial time delays of the echo signal waveforms also change and different time transformations are required to linearise the waveforms with respect to selected focus line 9. The time transformation of the echo signals required with respect to focus line 9 results in repositioning of the signals E1' and E2' as shown in Figure 9. Again, by comparison with the echo signal waveform shown in Figure 6, it is seen that firstly the initial time delays have been eliminated resulting in the noise pulses N being time coincident. Secondly, the timing of the individual echo signals in each echo signal waveform has been modified to put them on the same linear time scale with respect to the selected focus line 9. The three echo signals E2, emanating from the single point P2 are the only echo signals associated with focus line 9, and are made coincident in time by the transform process. The three echo signals resulting from the three detected echoes from point P1, although re-positioned by the time transform process, remain displaced in time. Correlation of these three time transformed echo signal waveforms by multiplication produces a large intensity signal representing the three time coincident echo signals E2'. The spurious echo signals E1' are largely eliminated by multiplication with near zero signals. The resultant large amplitude correlated signal is shown as signal E2'' in Figure 10. The time of occurrence of the correlated output signal E2'' indicates the location of the reflecting point P2 along the selected focus line 9.

In order to provide a high resolution image of the internal structure of a body, the portion of the scan plane insonified by each injected pulse is investigated along each of a plurality of equidistant focus lines distributed across the width of the pulse beam. Different time transforms need to be performed on the echo signal waveforms generated by each of the selected receiver pairs each time a new focus line is selected and at the line scan rate of the CRT on which the image is to be displayed. By progressively stepping from one focus line to another across the incident beam and detecting reflecting surfaces on each line in turn, an image of the internal structure of the insonified portion of the body in the scan plane can be built up. Further image portions can be developed by repeating the process with the other transmitters in the linear array taken one at a time in order until an image of a complete sectional slice of the body is produced. By using the correlated echo signals representing the reflecting entities on each selected focus line taken in turn to modulate the beam brightness of corresponding scan lines of a raster scanned CRT, a real-time image of the internal structure of the body under investigation can be produced on the screen for direct viewing.

The technique employed for performing time transforms at the high rate required will now be described. The echo signal waveforms generated by each selected receiver pair are digitised and clocked into a random-access memory at a constant rate and stored. The relative positions of the stored individual echo signals in each waveform represents the relative time of occurrence of the echoes detected by the associated receiver pair. The time transform of a stored echo signal waveform is performed by reading out the contents of the random-access memory at a controlled rate determined by calculation based on the geometric relationship between the current focus line and the receiver pair that generated the stored echo information. It will be appreciated that both the advancing interval required to remove the initial delay td (that is the time taken for the sound to travel the distance between the focus line and the receiver pair) and the dynamic control of the read-out clock rate to re-position echo signals received by off-axis receiver pairs will change for every receiver pair and focus line combination selected. The advancing interval for each receiver pair and focus line combination can readily be calculated and is a constant value for each scan line. The read-out frequency Fr of the random-access store also changes from one focus line to the next for each receiver pair and varies in accordance with the depth of penetration of the incident pulse into the body. The relationship of the varying frequency Fr of the random-access memory read clock to the fixed frequency Fw of the random-access memory write clock is given by the expression

$$Fr = \tfrac{1}{2}Fw(1 + (1 + (d/x)^2)^{-1/2})$$

where d is the physical distance between the receiver pair and selected focus line, and x is the physical distance into the body from the transmitter along the focus line. This expression is derived by using standard geometry which will not be given herein. From inspection of this expression it can be seen that when the value of x is much less than the value of d, then the frequency Fr of the read clock approaches half the frequency Fw of the write clock. This has the effect of increasing the time intervals between the echo signals where this condition prevails, that is short distances into the body along the focus line for an off-axis receiver pair. When the value of x is much greater than the value of d, that is when the sound has penetrated deeply into the body, then the frequency Fr of the read clock is substantially equal to the frequency Fw of the write clock irrespective of the position of the receiver pair with respect to the focus line.

Ultrasonic imaging apparatus incorporating the present invention will now be described with reference to a simplified circuit diagram shown in Figure 1. In the figure an ultrasonic probe 1 is shown consisting of twenty-three transmitters T1 to T23 arranged in a row, positioned between two parallel rows of twenty-four receivers arranged in pairs RA1, RB1 to RA24, RB24. Each transmitter is individually connected to a count and decoder unit 10 which operates in response to increment transmitter signals on line 11, and fire signals on line 12, both supplied by microprocessor control unit 13 to connect a d.c. supply 14 successively to each of the transmitters T1 to T23 in turn so as to inject a continuous sequential cycle of ultrasonic pulses into the body under investigation. The transmitters are closely adjacent one another so that a complete section of the body, defined by the scan plane of the transmitters, is repetitively and continuously insonified by the sequence of injected pulses.

The echoes detected by the receivers are focussed in the scan plane in the manner described with reference to Figure 3. Thus, receiver RA1 is connected to differential amplifier 2.A1; receiver RB1 to differential amplifier 2.B1; receiver RA2 to differential amplifier 2.A2; and so on. The outputs from associated pairs of amplifiers are then multiplied together to perform the correlation function. In this embodiment, the pairs of receivers are associated in groups by enabling the differential amplifiers to which they are connected. Each group consists of three adjacent pairs of receivers with the associated transmitter located between the first and second pair. Specifically, receiver pairs RA1, RB1; RA2, RB2; and RA3, RB3; are associated with transmitter T1, receiver pairs RA2, RB2; RA3, RB3; and RA4, RB4 with transmitter T2 and so on stepping through the array to the final group RA22, RB22; RA23, RB23; and RA24, RB24 associated with transmitters T22 and T23. Each differential amplifier is of the type having a switch control to enable or inhibit its output. The switch control inputs of the amplifiers are connected to corresponding outputs of decoder portions of register and decoder unit 15. The individual groups of receivers required in associated with each transmitter are thereby selected in response to select receiver information supplied over bus 16 from microprocessor control unit 13 and loaded into the register portion of unit 15. The contents of the register are decoded by the decode portion to supply appropriate signals over the selected switch control lines of the amplifiers to form the group of amplifier pairs and thus receiver pairs specified. Since each group consists of only three receiver pairs, only three multipliers 3.1, 3.2 and 3.3 are required to correlate the output signals in order to focus the echo signals in the scan plane.

Specifically, the outputs of amplifiers 2.A1, 2.A4, 2.A7, 2.A11 ... 2.A22 are connected to one input of multiplier 3.1 and the outputs of amplifiers 2.B1, 2.B4, 2.B7, 2.B11 ... 2.B22 are connected to the other input of multiplier 3.1. Similarly, the outputs of amplifiers 2.A2, 2.A5, 2.A8, 2.A12 ... 2.A23 are connected to one input of multiplier 3.2 and the outputs of amplifier 2.B2, 2.B5, 2.B8, 2.B12 ... 2.B23 are connected to the other input of multiplier 3.2. The outputs of the remaining amplifiers are connected to one or other inputs of multiplier 3.3 in an identical manner. In use, the microprocessor control unit 13 selects and energises each transmitter in turn simultaneously selecting the associated groups of three receiver pairs.

The echo signal waveform appearing at the output of each multiplier following injection of a single pulse into the body, is applied as input to an individual one of three identical focus units 17.1, 17.2 and 17.3. Only one of these units 17.1 is shown in the figure for the sake of clarity. The individual echo signals of the echo signal waveform entering the focus unit are amplified by analogue amplifier 18, converted to corresponding 6-bit digital representations on 6-bit bus 19 by analogue-to-digital converter 20; and clocked into one or other of two random-access memories (RAMs) 21.1 or 21.2 under control of associated address counters 22.1 and 22.2, and a constant frequency clock signal Fw supplied over clock line 23 derived from master clock 24 by microprocessor control unit 13. Each RAM 22.1 and 21.2 has six rows of 1024 available storage locations for receiving the 6-bit echo signal representations. The address counters are reset following processing of each scan line and start stepping through each columns of RAM storage locations at the rate defined by constant frequency clock signal Fw immediately following injection of a pulse into the body.

The resulting 6-bit digital representation of the resulting echo signals are loaded as they occur into the six rows of the selected RAM and are stored in the column of storage locations currently being addressed by the address counter. The address counters address the RAMs from left to right in the figure through the 1024 available storage locations so that the received echo signal representations are stored in the order they are received in the direction left to right in the RAM. The constant clock frequency Fw selected by the microprocessor unit is such that the time of one write cycle through the RAM, equals the period extending from the time of the injected pulse to the time of arrival of the latest echo of interest from the portion of the body under investigation. Thus at the end of each write cycle, all echo signal representations are stored as 6-bit digital values physically displaced in the RAM in storage locations corresponding in position to the relative time of occurrence of the echoes.

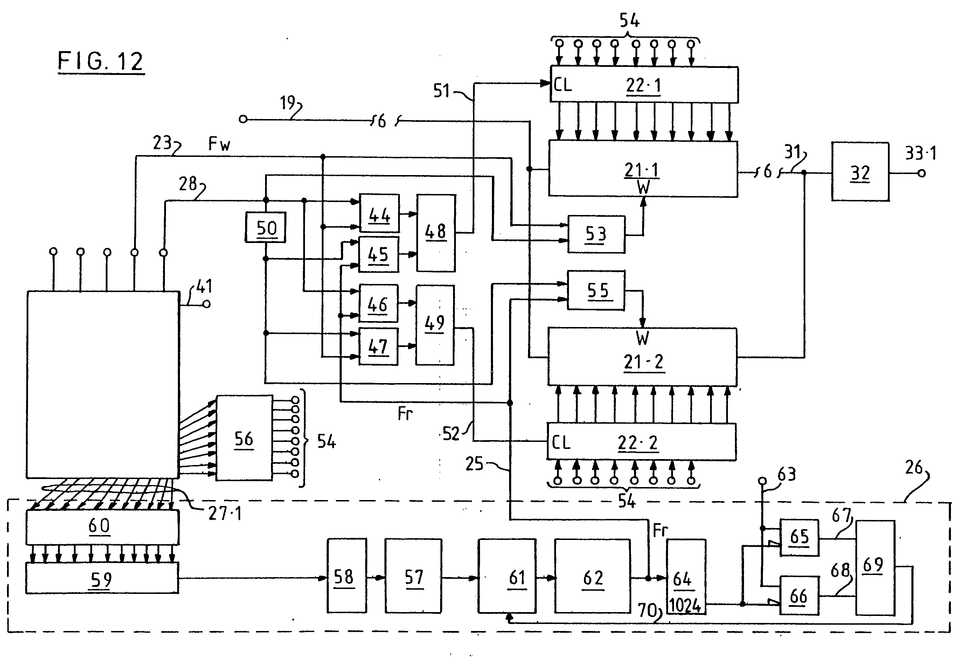

The time transformation of the stored echo signal representations to compensate for off-axis displacement of the associated receiver pair is achieved as stated hereinbefore by reading-out the contents of the RAM at a controlled predetermined variable frequency Fr. In general, this involves stepping the address counter through the RAM during read-out initially at a rate slower than the constant clock rate Fw, to increase the time intervals between the first received echo signals, but with a progressively increasing frequency as echoes are received from deeper within the body until eventually the read-out frequency of signals substantially equals the constant frequency Fw at which they were received and stored. The read-out frequency is supplied over line 25 by a swept frequency generator 26 which operates in response to signals supplied over 11-bit bus 27.1 by microprocessor control unit 13. Similar buses 27.2 and 27.3 carry similar signals to other generators in the other two focus unit 17.2 and 17.3 respectively. The control and operation of the swept frequency generator 26 will be described in detail hereinafter with reference to Figure 12.

The provision of two RAMs in each focus unit enables the storage of successive complete echo signal waveforms to alternate from one RAM to the other in order to permit uninterrupted processing. Thus, whilst an echo signal sequence resulting from the current transmitted pulse is being stored in one RAM, the echo signal waveform previously stored in the other RAM is being processed and read-out. Although the processing of stored echo signals generally involves read-out from the RAM at a varying frequency, the RAM read and write cycles are synchronised in as much as they start and end together. Furthermore as will be described hereinafter, servo control circuits maintain the RAM read cycles in synchronism with line scan control circuits of a CRT used to display the echo information.

The selection of write and read cycles for the two RAMs in each focus unit is by means of a binary level select signal supplied over select line 28 from microprocessor contol unit 13 and two 2-pole ganged switches 29.1, 29.2 and 30.1, 30.2. The arrangement is such that a positive-going signal transition on line 28 requires RAM 21.1 to be switched into write mode and RAM 21.2 to be switched to read-out mode. Accordingly, the occurrence of such a transition is used to close switch-pole 29.1 and open switch-pole 29.2 thereby connecting the constant frequency clock Fw to address counter 22.1, and simultaneously to open switch-pole 30.1 and close switch-pole 30.2 thereby connecting the variable frequency clock Fr to address counter 22.2. The positive-going transition of the select signal is also used together with the clock signals supplied to the two address counters to switch the associated RAMs into the required mode of operation.

A negative-going transition of the select signal over line 28 required RAM 21.1 to be switched into read-out mode and RAM 21.2 to be switched to write mode. Occurrence of such a transition changes all switch-pole states so that the variable frequency clock Fr is connected to address counter 22.1 and the constant frequency clock Fw to address counter 22.2. The binary level of the select signal changes state at the end of each scan line so that the mode of operation of the two RAMs in each focus unit alternate at the line scan rate so that there is a continuous supply of time transformed echo signals supplied by one or other RAMs to 6-bit output bus 31 in response to a continuous supply of echo signals supplied, one RAM cycle previously, to one or other of the RAMs over 6-bit input bus 19. The 6-bit digital time transformed echo signals supplied over output bus 31 are converted by digital-to-analogue converter 32 to corresponding analogue signals output on line 33.1.

Identical processes are conducted in the other two focus units 16.2 and 16.3 receiving echo signals at the same time from the other two receiver pairs in the selected groups associated with the currently pulsed transmitter and corresponding outputs are supplied on lines 33.2 and 33.3 respectively. The three time-transformed error signal waveforms in the group on corresponding lines 33.1, 33.2 and 33.3 are applied as inputs to multiplier 34 which performs the signal correlation function as described hereinbefore. The correlated output signals from multiplier 34 represent echo signals from reflecting surfaces along the selected focus line with unwanted echoes from elsewhere in the body and other spurious noises having been largely eliminated. The relative position of the signals in the correlated signal output corresponds to the relative positions of the actual echoes that would be received by a receiver pair lying exactly on the focus line.

The focus line echo signals, amplified by the correlation process, are supplied over line 35 to the intensity control of a raster-scanned CRT display device 36 to generate a visual representation of the line of the CRT screen. The X and Y deflection of the CRT is controlled in the usual manner at a constant scanning rate by ramp generator 37 supplying X-deflection signals over line 38 and staircase function generator 39 supplying Y-deflection signals over line 40. The operation of both scan control devices is by means of scan control signals supplied over line 41 derived from the master clock 24 by the microprocessor control unit 13. In this preferred embodiment, 22 evenly spaced unique CRT scan lines are generated for each individual pulse injected into the body. Thus, with the 23 pulse transmitters a total of 506 image scan lines are generated for display. The frame scan rate of the display is synchronised with the transmitter pulse rate to ensure that all the transmitters T1 to T22 are pulsed once during each frame scan.

Finally, since echo signal amplitudes are attenuated as they pass through the body tissue, a gain profile generator 42 supplies variable voltage gain control signals over lines 43.1, 43.2 and 43.3 to gain control input of each amplifier 18, to progressively increase the gain of the amplifiers in the three focus units 17.1, 17.2 and 17.3 to compensate for the attenuation. The gain profile generator 42 comprises a read-only store (not shown) containing voltage values calculated to compensate echo attenuation for progressively increasing distances into the body. The contents of the read-only store are read out successively in synchronism with the line scan under control of the timing signals on line 41.

The RAM control, initial time delay td elimination, and the control and operation of the swept frequency generator 26 will now be described with reference to Figure 12. In this figure, the two RAMs 21.1 and 21.2 are shown together with their respective address counters 22.1 and 22.2. The 6-bit input bus 19 is shown common to the two RAMs and the 6-bit output bus 31 from the RAMs is shown connected to digital-to-analogue converter 32. The swept frequency generator 26 is identified in dotted outline accessed by multiple line input bus 27.1 from the microprocessor control unit 13. The two 2-pole switches 29.1, 29.2 and 30.1, 30.2 are implemented as will be shown by various combinations of AND-gates 44, 45, 46 and 47 and OR-gates 48 and 49. The switch select line 28 is shown connected directly to AND-gates 44 and 46 and via inverter 50 to AND-gates 45 and 47. The constant frequency clock line 23 is shown connected direct to AND-gates 44 and 47 and the variable frequency clock line 25 from generator 26 is shown connected direct to AND-gates 45 and 46. The outputs from AND-gates 44 and 45 are transmitted via OR-gates 48 over line 51 to address counter 22.1 and the outputs from AND-gates 46 and 47 are transmitted via OR-gate 49 over line 52 to address counter 22.2. The noninverted select signal from line 28 is connected to one input of AND-gate 53 and inverted select signal from inverter 50 to AND-gate 55. The constant frequency line 23 is connected as second input to AND-gate 53 and the variable frequency line 25 as second input to AND-gate 54. The output from AND-gate 53 is connected to the Read/Write control of RAM 21.2 and output from AND-gate 54 to the Read/Write control of RAM 21.2.

Ram Control

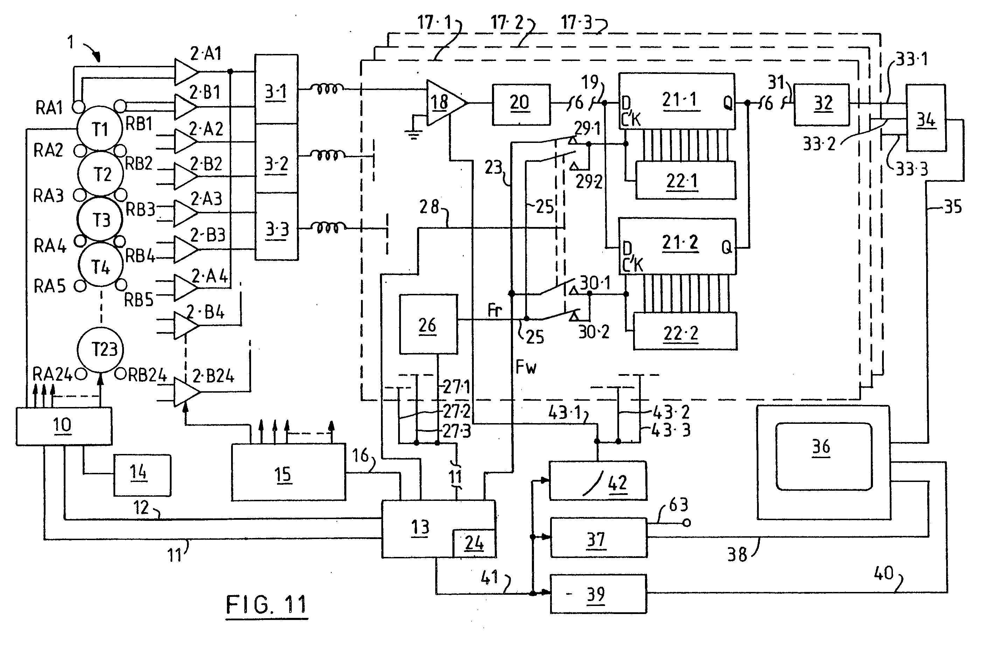

A positive-going transition of the binary-level select signal supplied from microprocessor control unit 13 over line 28 enables AND-gate 53 resulting in the constant frequency clock signal on line 23 being gated through. This is used to set the RAM 21.1 in write mode for the duration of the up-level of the select signal. The constant frequency clock signal Fw is also gated through AND-gate 44 and OR-gate 48 (switch-pole 29.1, Figure 11), to increment the address of address counter 22.1 at a constant rate. During the period of the up-level of the select signal on line 28, AND-gate 55 is blocked and RAM 21.2 is maintained in read-out mode. The variable frequency clock signal Fr on line 25 is gated through AND-gate 46 and OR-gate 49 (switch-pole 30.2, Figure 11) to increment the address of address counter 22.2 at a variable rate.

A negative-going transition of binary-level select signal on line 28 blocks AND-gate 53 terminating the write cycle of RAM 21.2 and enables AND-gate 54 initiating the write cycle of RAM 21.2. The inverted select signal now gates the variable frequency clock signal Fr through AND-gate 45 and OR-gate 48 (switch-pole 30.1, Figure 11) to address counter 22.1 and the constant frequency clock signal Fw through AND-gate 47 and OR-gate 49 (switch-pole 29.2, Figure 11) to address counter 22.2.

Initial Time Delay (td) Elimination

The value of Td is directly proportional to the distance d of the receiver pair from the selected focus line and, although it changes from line to line, its value is constant for the line under investigation. Accordingly, only a single correction need be made for each receiver pair for each selected focus line. The correction is made, as described hereinbefore, by advancing the respective echo signal waveforms by amounts corresponding to the initial delays. This is most readily achieved in the preferred embodiment of the present invention by preloading the low addresses of the address counters 22.1 and 22.2 in each focus unit with pre-set acounts corresponding to the unwanted time delays. The pre-set amounts are calculated having regard to the relative spacings of the receiver pairs; the number of selected line scans per transmitter input pulse; and the individual spacing between the lines. All the different calculated values are stored in a RAM 56 which is accessed as required under the control of microprocessor control unit 13 to provide the pre-load values over bus 54 for the selected address counter prior to commencement of the write cycle of the associated RAM. Clearly, with three pairs of receivers involved during the generation of each of the 22 focus lines certain values for initial time delay, and thus pre-load address counter off-sets, will occur again and again. By storing only the different values of the pre-load off-set in the microprocessor read-only store (not shown) and then loading RAM 56 with the required values for the particular receiver/focus line combination considerable store space is saved.

Swept Frequency Generator 26

As explained hereinbefore, it is only when a receiver pair is symmetrically positioned on the selected focus line that the associated RAM read-out is at a constant frequency. For receiver pairs off-set from the axis the RAM read-out cycle frequency is initially slow progressively increasing to a constant value. The rate of echo receipt varies in accordance with the off-set distance d of each receiver pair from the selected line scan and also by the distance x of the reflecting surfaces within the body. The further the distance between a receiver pair and a focus line, the more crowded are the received and stored error signals and the initial read-out rate must be slowed by a corresponding amount to re-position the echo signals by appropriate amounts.

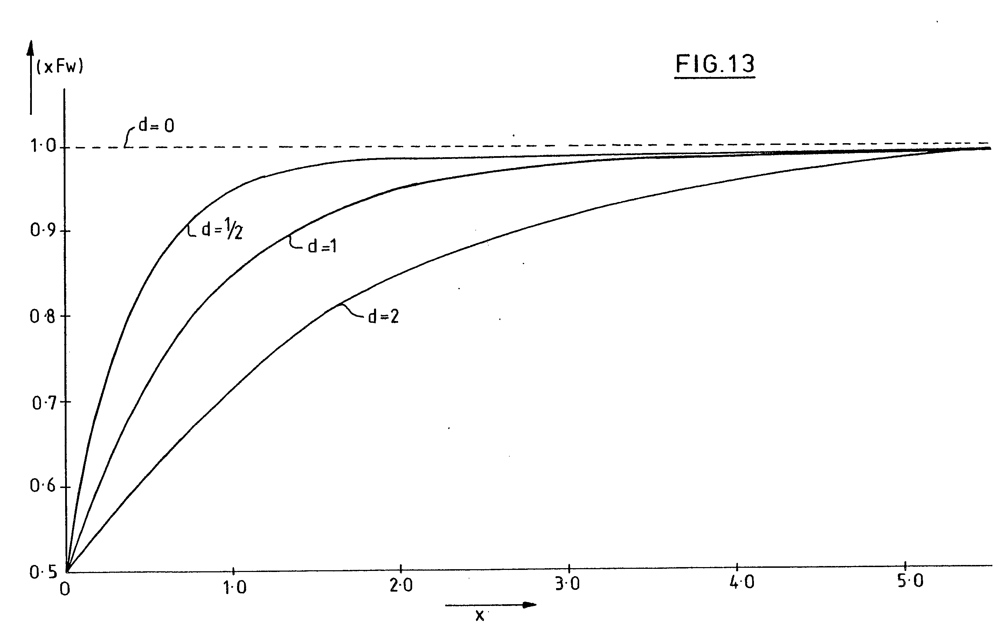

Figure 13 shows three curves of frequency Fr against distance x for three different receiver pair off-sets $(d = \frac{1}{2})$, $(d = 1)$, and $(d = 2)$ according to the expression

$$Fr = \tfrac{1}{2}Fw(1 + (1 + (1/x)^2)^{-1/2}).$$

These curves show that all values of Fr lie between $Fr = \frac{1}{2}Fw$ and $Fr = Fw$, and that the greater the receiver pair off-set the slower is the increase in the initial RAM read-out frequency. It should also be noted that the read-out frequency for echoes received from beyond 5 cms depth is substantially the same $(Fr = Fw)$ irrespective of the magnitude of receiver pair off-set. Read-out frequency for on-axis receiver pair $(d = 0)$ is constant at the write frequency $(Fr = Fw)$.

If corresponding values of Fr are stored for values of x over the range of variation of the curves, these values can subsequently be used to indicate the required read-out frequency for the stored echo signal waveform. Since the value of d changes for each receiver pair each time a new focus line is selected, storage of such a large family of such curves would be an extremely extravagant use of storage space. The technique devised to overcome this problem is to store the shape of the curve representing the distance/read-out frequency relationship and to dynamically generate the other curves as they are required by varying the scale. In this example, the maximum receiver pair/focus line distance is 2 cms, and the particular profile corresponding to this distance is the one selected for storage. All other profiles are generated from this stored profile. Accordingly, the profile of the curve d = 2 in Figure 13 is stored in ROS 57 as digital values of Fr corresponding to 256 incremented values of x. A ROS address register 58 clocks through the ROS at a frequency determined by a signal supplied from frequency multiplier 59, the multiplication factor for which is determined by a value (proportional to the current distance d) loaded by microprocessor control unit 13 into register 60 over multiple bus 27.1 The curve profile is changed simply by changing the ROS address register clock frequency. Thus to change the profile from that required for a receiver pair off-set of d = 2 to a receiver pair off-set of d = 1, the frequency multiplier supplier doubles the clocking frequency of address register 58. Similarly, a fourfold increase in clocking frequency of the address register generates the profile represented by the curve $d = \frac{1}{2}$ required by a receiver pair $\frac{1}{2}$ cm from the focus line. For on-axis receiver pairs the speed of access of the ROS is so high that in effect the read-out frequency is immediately at the maximum value Fw. Equally, well, the curve can be modified for more distant receiver pairs by dividing the clocking frequency by an appropriate fractional value. The output from ROS 57 is converted to analogue form by digital-to-analogue converter 61 and the analogue signal supplied to voltage controlled oscillator VCO 61. The output of VCO 62 is the variable frequency Fr applied to line 25 and used to clock the address counters during RAM read-out. The stored and derived frequency curves control the read out rate of the first received echoes. After the entire contents of the ROS 57 has been accessed, the clock frequency of the address counter is locked onto the maximum rate $Fr = Fw$ for the remainder of the line scan.

In order to maintain the CRT scan mechanism and the read-out of the RAM in synchronism, VCO 62 is included in a closed servo loop receiving as reference end-of-line pulses generated by the CRT on line 63 derived from ramp generator 37. Each scan line is composed of 1024 possible picture elements (pels) corresponding to the 1024 row positions in RAM 21.1 and 21.2. The oscillator output is applied as input to counter 64 which provides an output whenever the count reaches 1024. Clearly, if the two parts of the apparatus are synchronised, then the output from counter 64 and the end-of-line pulse on line 63 should coincide. By comparing the time of occurrence of the two signals in AND-gates 65 and 66 with signal inversion as shown by the marked lines, signals are produced in known manner on go-slow line 67 and go-faster line 68 indicating respectively that the VCO frequency should be slowed down or speeded up to correct the error. These signals are converted by error signal circuit 69 to a voltage of appropriate magnitude and applied over line 70 to a control input of digital-to-analogue converter 61 thus closing the servo loop.

The ultrasonic imaging apparatus described is a stand-alone device for producing real-time images of the internal structure of bodies. The method employed considerably enhances the lateral resolution of the resulting image which is normally displayed on a screen but may also be produced as a hard copy by a printer/plotter. Although specifically designed for use in medical investigations and diagnosis, the extremely high resolving power of the apparatus makes it particularly useful for determining the precise location of faults such as minute cracks and fissures in metallic structures. Additionally, although in this preferred embodiment a group of three adjacent receiver pairs are used to generate the echo information along selected focus lines, other combinations of receiver pairs, not necessarily adjacent to one another, may be selected.

## Claims

1. A method for use in the production of a cross-sectional image of a body using ultrasonic imaging apparatus operating on the pulse echo principle and including a linear array (1) of ultrasonic probes each including a probe injector (T1, T2, ...) capable of injecting pulses into a heterogeneous body and a probe receiver (RA1, RB1; RA2, RB2; ...) capable of detecting echoes from discontinuities within the body, said method characterised by the steps of: cyclically and sequentially activating successive adjacent probe injectors (T1; T2; ...) each to inject in turn a single pulse into a body under investigation thereby to produce in combination a repetitive sequence of pulses lying substantially in a single scan plane (4); following the injection of each pulse from an individual injector (eg T3), deriving a set of echo signal waveforms (E1; E2, Fig. 6) from all the echoes detected by a group of probe receivers (eg RA1, RB1; RA4, RB4; RA7, RB7) preselected to be associated with that probe injector; performing time transform operations on said set of echo signal waveforms with respect to a first notional focus line into the body lying in the scan plane either along or parallel to the longitudinal axis of the injector so that those echo signal waveforms (e.g. E1) within the set derived from echoes of the injected pulse from discontinuities within the body along said first notional focus line are converted to the same linear time scale (E1', Fig. 7) for all receivers in the preselected group; correlating the echo signal waveforms from all the receivers within said preselected group of receivers so that those echo signal waveforms derived from echoes of the injected pulse from discontinuities along said notional focus line are reinforced (E1'', Fig. 8); and repeating the time transform and waveform correlation process with the same set of echo signal waveforms with respect to one or more further notional focus lines lying in the scan plane displaced from but parallel to said first notional focus line; the arrangement being such that, in use, reinforced correlated echo signal waveforms repetitively are produced representing discontinuities on each notional focus line taken in turn stepping progressively from one notional focus line to the next across the scan plane.

2. A method as claimed in claim 1, comprising the step of using the reinforced correlated echo signal waveforms representing discontinuities on the notional focus lines to modulate the intensity of a raster-scanned CRT to display on corresponding scan lines of the CRT display operating in synchronism with the ultrasonic imaging apparatus, the locations within the body under investigation for said discontinuities.

3. A method as claimed in claim 1 or claim 2, in which a time transform on an echo signal waveform includes the step of advancing waveform as a whole with respect to time by an amount corresponding to the initial time delay due solely to the off-set of the transducer generating the waveform from the selected focus line.

4. Ultrasonic scanning apparatus for use in the production of a cross-sectional image of a body, comprising a linear array (1) of ultrasonic probes each including a probe injector (T1; T2; ...) capable of injecting pulses into a heterogeneous body and a probe receiver (RA1, RB1; RA2, RB2 ...) capable of detecting echoes from discontinuities within the body, characterised by means (10, 13, 14) for cyclically and sequentially activating successive adjacent probe injectors (T1; T2; ...) each to inject in turn a single pulse into a body under investigation thereby to produce in combination a repetitive sequence of pulses lying substantially in a single scan plane; means (3, 13, 15), following the injection of each pulse from an individual injector (e.g. T3), for deriving a set of echo signal waveforms from all the echoes detected by a group of probe receivers (e.g. RA1, RB1; RA4, RB4; RA7, RB7) preselected to be associated with that probe injector; means (13, 20, 21, 22, 26, 42) for performing time transform operations on said set of echo signal waveforms with respect to a first notional focus line into the body lying in the scan plane either along or parallel to the longitudinal axis of the injector so that those echo signal waveforms within the set derived from echoes of the injected pulse from discontinuities within the body along said first notional focus line are converted to the same linear time scale for all receivers in the preselected group; means (32, 34) for correlating the echo signal waveforms from all the receivers within said preselected group of receivers so that those echo signal waveforms derived from echoes of the injected pulse from discontinuities along said notional focus line are reinforced; and means (26) causing the time transform and waveform correlation process to be repeated with the same set of echo signal waveforms with respect to one or more further notional focus lines lying in the scan plane displaced from but parallel to said first notional focus line.

5. Ultrasonic scanning apparatus as claimed in claim 4, including means for loading in parallel to individual echo signals in the echo signal waveform from each probe in said selected group of probe receivers as they are generated into successive available locations of an associated sequentially addressed random access store (21) operable under control of address means (22) at a first predetermined rate, means for reading-out in parallel the echo signals from the store under control of said address means operable at a second predetermined rate, the relationship between the first and second rate being selected in accordance with the time transform to be performed on the stored echo signal waveform.

6. Ultrasonic scanning apparatus as claimed in claim 5, in which each said associated random access store is sequentially addressed by means of an address counter (22.1; 22.2) which when initiated clocks through each available storage location of its associated random access store (21.1, 21.2) in turn at said first or second predetermined rate.

7. Ultrasonic scanning apparatus as claimed in claim 6, in which echo signal waveforms are loaded into store at a constant rate Fw and read-out at a variable rate Fr, wherein the variable read-out rate of each stored signal waveform is a function of the distance d of the probe detecting the echoes represented by the waveform from the selected focus line, and the distance x of the discontinuities within the body generating the echo signals from the array, given by the expression:

$$Fr = \tfrac{1}{2}Fw(1 + (1 + (d/x)^2)^{-1/2})$$

and in which, prior to read-out of a random access memory, the associated address counter is preloaded with a predetermined value to off-set the contents of the memory by an amount such that the locations storing that portion of the echo signal waveform representing the intial time delay due solely to the physical off-set of the associated probe from the selected focus line is excluded from read-out.

8. Ultrasonic scanning apparatus as claimed in claims 5, 6 or 7, in which said echo signal waveforms from a selected group of probes resulting from successive pulses injected into the body are stored alternately in one or other of two corresponding groups of random access memories, the arrangement being such that during the period in which the echo signal waveforms previously stored following injection of a pulse into the body are being read-out from one group of random access memory, the echo signal waveforms resulting from injection of the next pulse into the body are being stored in the other group of random access memory.

9. Ultrasonic scanning apparatus as claimed in claim 5, 6, 7 or 8, in which said means for correlating the echo signal waveforms from all the receivers within said preselected group of receivers comprises a multiplier (34) operable to receive and multiply together the output signals from the random access store as they are read out at said second predetermined rate and said apparatus further including control means (37, 39) for generating scan control signals for driving a raster-scanned CRT (36) in synchronism with said address means, and means (35) for supplying the output signals from said multiplier representing discontinuities on said notional focus line to said CRT in order to modulate the scanning beam intensity thereby to display on corresponding scan lines of the CRT, the locations within the body under investigation for said discontinuities.

10. Ultrasonic scanning apparatus as claimed in any one of the claims 4 to 9, in which each said probe consists of an ultrasonic injector (eg T1) operable to transmit a pulse of ultrasound along a predetermined axis and a pair of ultrasonic receivers (e.g. RA1, RB1) lying one on each side of the axis equidistant therefrom and in a plane at right angles to the axis, the output of the receivers being connected to respective inputs of a signal multiplier (3.1), said echo signal waveforms generated by each probe being derived from the output of the associated signal multiplier.

**Patentansprüche**

1. Verfahren zum Erzeugen eines Querschnittbildes eines Körpers unter Verwendung eines Ultraschallbildgerätes, das nach dem Impuls-Echo-Prinzip arbeitet und eine lineare Anordnung (1) von Ultraschallprüfköpfen aufweist, die einen Impulse in einen heterogenen Körper einschallenden Sendeprüfkopf (T1; T2; ...) und einen Echos von Unstetigkeiten im Körper erfassenden Empfängerprüfkopf (RA1, RB1; RA2, RB2; ...) aufweisen, wobei das Verfahren durch folgende Schritte gekennzeichnet ist: Zyklisches und sequentielles Aktivieren aufeinanderfolgender Sendeprüfköpfe (T1; T2; ...), um jeweils der Reihe nach einen einzelnen Impuls in den zu prüfenden Körper einzuschallen, wodurch in Kombination eine sich wiederholende Folge von Impulsen erzeugt wird, die im wesentlichen in einer einzigen Abtastebene (4) liegen; nach dem Einschallen jeden Impulses von einem individuellen Sendeprüfkopf (z.B. T3) Ableiten eines Satzes von Echosignalkurven (E1, E2, Fig. 6) aus allen Echos, die von einer Gruppe von Empfängerprüfköpfen (z.B. RA1, RB1; RA4, RB4; RA7, RB7) erfaßt wurden, welche für die Zuordnung zu diesem Sendeprüfkopf ausgewählt wurden; Durchführen einer Zeittransformation auf den Satz der Echosignalkurven bezüglich einer ersten fiktiven Brennlinie, die in der Abtastebene im Körper liegt und sich entweder entlang oder parallel zur Längsachse des Sendeprüfkopfes erstreckt, so daß diejenigen Echosignalkuven (z.B. E1) innerhalb des Satzes, die von Echos des eingeschallten Impulses von Unstetigkeiten im Körper entlang der ersten fiktiven Brennlinie abgeleitet sind, auf die gleiche lineare Zeitachse (E1', Fig. 7) für alle Empfänger in der ausgewählten Gruppe umgesetzt werden; Korrelieren der Echosignalkurven von allen Empfängern innerhalb der ausgewählten Gruppe von Empfängern, so daß die von Echos der eingeschallten Impulse an den Unstetigkeiten entlang der fiktiven Brennlinie abgeleiteten Echosignalkurven verstärkt werden (E1'', Fig. 8); und Wiederholen der Zeitransformations- und Kurvenkorrelationsprozesse mit dem gleichen Satz von Echosignalkurven bezüglich einer oder mehreren weiteren fiktiven Brennlinien, die in der Abtastebene gegenüber der ersten fiktiven Brennlinie versetzt aber parallel liegen, wobei die Anordnung so getroffen ist, daß beim Einsatz verstärkte korrelierte Echosignalkurven wiederholt erzeugt werden, die Unstetigkeiten auf jeder fiktiven Brennlinie darstellen und die der Reihe nach fortschreitend von einer fiktiven Brennlinie zur nächsten über die Abtastebene erfaßt werden.

2. Verfahren nach Anspruch 1 mit dem Verfahrensschritt des Verwendens der verstärkten korrelierten Echosignalkurven, die Unstetigkeiten entlang der fiktiven Brennlinien darstellen, zur Modulierung der Intensität einer im Raster abgetasteten Kathodenstrahlröhre zum Anzeigen der Orte innerhalb des hinsichtlich der Unstetigkeiten geprüften Körpers auf zugeordneten Abtastlinien der Kathodenstrahlröhrenanzeige, die synchron zum Ultraschallbildgerät arbeitet.

3. Verfahren nach Anspruch 1 oder 2, bei dem eine Zeittransformation auf eine Echosignalkurve den Schritt des Vorschiebens der gesamten Signalkurve gegenüber der Zeit um einen Betrag umfaßt, der der anfänglichen Zeitverzögerung entspricht, die ausschließlich durch den Versatz des die Signalkurve erzeugenden Prüfkopfes gegenüber der ausgewählten Brennlinie verursacht ist.

4. Ultraschallabtastvorrichtung zum Einsatz bei der Erzeugung eines Querschnittsbildes eines Körpers, mit einem linearen Gruppenstrahler (1) aus Ultraschallprüfköpfen, die jeweils einen Impulse in einen heterogenen Körper einschallenden Sendeprüfkopf (T1; T2; ...) und einen die Echos von Unstetigkeiten im Körper erfassenden Empfängerprüfkopf (RA1, RB1; RA2, RB2; ...) aufweisen, gekennzeichnet durch Einrichtungen (10, 13, 14) zum zyklischen und sequentiellen Aktivieren benachbarter Sendeprüfköpfe (T1; T2; ...), von denen jeder jeweils der Reihe nach einen einzelnen Impuls in den zu prüfenden Körper einschallen soll, um in Kombination eine sich wiederholende Folge von Impulsen zu erzeugen, die im wesentlichen in einer einzigen Abtastebene liegen; Einrichtungen (3, 13, 15) die nach dem Einschallen jeden Impulses von einem individuellen Sendeprüfkopf (z.B. T3) einen Satz von Echosignalen aus allen Echos ableiten, die von einer Gruppe von Empfängerprüfköpfen (z.B. RA1, RB1; RA4, RB4; RA7, RB7) erfaßt werden, welche für die Zuordnung zu diesem Sendeprüfkopf ausgewählt wurden; Einrichtungen (13, 20, 21, 22, 26, 42) zum Durchführen einer Zeittransformation auf den Satz der Echosignalkurven bezüglich einer ersten fiktiven Brennlinie, die in der Abtastebene im Körper liegt und sich entweder entlang oder parallel zur Längsachse des Sendeprüfkopfes erstreckt, so daß diejenigen Echosignalkurven innerhalb des Satzes, die von Echos des eingeschallten Impulses von Unstetigkeiten im Körper entlang der ersten fiktiven Brennlinie abgeleitet sind, auf die gleiche Zeitachse für alle Empfänger in der ausgewählten Gruppe umgesetzt werden; Einrichtungen (32, 34) zum Korrelieren der Echosignalkurven von allen Empfängern innerhalb der ausgewählten Gruppe von Empfängern, so daß die von Echos der eingeschallten Impulse an den Unstetigkeiten entlang der fiktiven Brennlinie abgeleiteten Echosignalkurven verstärkt werden; und Einrichtungen (26) die ein Wiederholen des Zeittransformations- und des Korrelationsprozesses mit dem gleichen Satz von Echosignalkurven bezüglich einer oder mehrerer weiterer fiktiven Brennlinien verursachen, die in der Abtastebene gegenüber der ersten fiktiven Brennlinie versetzt aber parallel liegen.

5. Ultraschallabtastvorrichtung nach Anspruch 4 mit Einrichtungen zum parallelen Laden individueller Echosignale in der Echosignalkurve von jedem Prüfkopf in der ausgewählten Gruppe von Empfängerprüfköpfen während ihrer Erzeugung in aufeinanderfolgene zur Verfügung stehende Plätze eines zugeordneten sequentiell adressierten Schreib-Lese-Speichers (21), der unter der Kontrolle einer Adressiereinrichtung (22) mit einer ersten vorherbestimmten Geschwindigkeit arbeitet, mit Einrichtungen zum parallelen Auslesen der Echosignale aus dem Speicher unter der Kontrolle der Adressiereinrichtung mit einer zweiten vorherbestimmten Geschwindigkeit, wobei das Verhältnis zwischen der ersten und zweiten Geschwindigkeit in Übereinstimmung mit der auf die gespeicherten Echosignalkurven durchzuführenden Zeittransformation ausgewählt ist.

6. Ultraschallabtastvorrichtung nach Anspruch 5, bei der jeder zugeordnete Schreib-Lese-Speicherplatz sequentiell mit Hilfe eines Adresszählers (22.1; 22.2) adressiert ist, der nach dem Starten der Reihe nach durch alle vorhandenen Speicherplätze des zugeordneten Schreib-Lese-Speichers (21.1, 21.2) mit der ersten oder zweiten vorherbestimmten Geschwindigkeit taktet.

7. Ultraschallabtastvorrichtung nach Anspruch 6, bei der Echosignalkurven mit einer konstanten Geschwindigkeit /Fw/ in den Speicher geladen und mit einer variablen Geschwindigkeit /Fr/ ausgelesen werden, wobei die variable Auslesegeschwindigkeit jeder gespeicherten Signalkurve eine Funktion der Entfernung /d/ des Prüfkopfes, der die durch die Kurve dargestellten Echos erfaßt, von der ausgewählten Brennlinie ist, und wobei die Entfernung /x/ der die Echosignale erzeugenden Unstetigkeiten innerhalb des Körpers für den Gruppenstrahler gegeben ist durch den Ausdruck:

$$Fr = \tfrac{1}{2}Fw \, (1 + (1 + (d/x)^2)^{-1/2})$$

und bei der vor dem Auslesen des Schreib-Lese-Speichers der zugeordnete Adresszähler mit einem vorherbestimmten Wert vorgeladen ist, um den Inhalt des Speichers um einen Betrag so zu versetzen, daß die Plätze, die den Teil der Echosignalkurve speichern, der die anfängliche Zeitverzögerung darstellt, die ausschließlich durch den physikalischen Versatz des zugeordneten Prüfkopfes gegenüber der ausgewählten Brennlinie verursacht ist, vom Auslesen ausgeschlossen sind.

8. Ultraschallabtastvorrichtung nach den Ansprüchen 5, 6 oder 7, bei der die Echosignalkurven einer ausgewählten Gruppe von Prüfköpfen, die aus aufeinanderfolgenden in den Körper eingeschalteten Impulsen resultieren, alternativ in der einen oder der anderen von zwei zugeordneten Gruppen von Schreib-Lese-Speichern gespeichert werden, wobei die Anordnung so getroffen ist, daß während der Periode, in der die Echosignalkurven, die vorher nach einer Einschaltung eines Impulses in den Körper gespeichert wurden, von einer Gruppe des Schreib-Lese-Speichers ausgelesen werden, die Echosignalkurven, die von der Einschaltung des nächsten Impulses in den Körper herrühren in die andere Gruppe des Schreib-Lese-Speichers geladen werden.

9. Ultraschallabtastvorrichtung nach den Ansprüchen 5, 6, 7 oder 8, bei der die Einrichtungen zum Korrelieren der Echosignalkurven von allen Empfängern innerhalb der ausgewählten Gruppe der Empfänger einen Multiplizierer (34) aufweisen, der geeignet ist, die Ausgangssignale des Schreib-Lese-Speichers zu empfangen und zu multiplizieren, während sie mit der vorherbestimmten Geschwindigkeit ausgelesen werden, wobei die Vorrichtung weiter über Steuereinrichtungen (37, 39) zum Erzeugen von Abtastkontrollsignalen verfügt, um eine rasterabgetastete Kathodenstrahlröhre (36) synchron zur Adressiereinrichtung anzusteuern, und wobei Einrichtungen zum Liefern der Ausgangssignale, die die Unstetigkeiten auf den fiktiven Brennlinien darstellen, von dem Multiplizierer zur Kathodenstrahlröhre vorgesehen sind, um die Abtaststrahlintensität zu modulieren, wodurch auf zugeordneten Abtastlinien der Kathodenstrahlröhre die Stellen innerhalb des bezüglich der Unstetigkeiten untersuchten Körpers dargestellt werden.

10. Ultraschallabtastvorrichtung nach einem der Ansprüche 4 bis 9, bei der jeder Prüfkopf einen Ultraschallsender (z.B. T1), der geeignet ist, einen Ultraschallimpuls entlang einer vorherbestimmten Achse auszusenden, und ein Paar von Ultraschallempfängern (z.B. RA1, RB1) aufweist, von denen einer auf jeder Seite der Achse im gleichen Abstand und in einer Ebene im rechten Winkel zur Achse liegt, wobei die Ausgänge der Empfänger mit zugeordneten Eingängen eines Signalmultiplizierers (3.1) verbunden sind und die durch jeden Prüfkopf erzeugten Echosignalkurven vom Ausgang des zugeordneten Signalmultiplizierers abgeleitet werden.

**Revendications**

1. Procédé utilisable dans la production d'une image en coupe d'un corps au moyen d'un appareil de formation d'image ultrasonore fonctionnant sur le principe de l'écho d'une impulsion et comprenant un ensemble linéaire (1) de sondes ultrasonores comportant chacune un injecteur de sonde (T1; T2; ...) capable d'injecter des impulsions dans un corps hétérogène et un récepteur de sonde (RA1, RB1; RA2, RB2; ...) capable de détecter des échos provenant de discontinuités à l'intérieur du corps, ledit procédé étant caractérisé en ce qu'il consiste à: activer cycliquement et séquentiellement des injecteurs de sonde adjacents successifs (T1; T2; ...) chacun pour injecter à son tour une impulsion unique dans un corps en examen, de façon à produire en combinaison une séquence répétitive d'impulsions situées sensiblement dans un même plan de scrutation (4); après l'injection de chaque impulsion d'un injecteur individuel (par exemple P3), établir un groupe de formes d'onde de signal d'écho (E1, E2, Figure 6) à partir de tous les échos détectés par un groupe de récepteurs de sonde (par exemple RA1, RB1; RA4, RB4; RA7, RB7) présélectionnés pour être associés à cet injecteur de sonde; exécuter des opérations de transformation du temps sur ledit groupe de formes d'onde de signal d'écho, par rapport à une première ligne focale de référence dans le corps située dans le plan de scrutation le long de l'axe longitudinal de l'injecteur ou parallèle à cet axe, de sorte que les formes d'onde de signal d'écho (par exemple E1) à l'intérieur du groupe, qui sont obtenues à partir des échos de l'impulsion injectée sur des discontinuités à l'intérieur du corps le long de ladite première ligne focale de référence, sont transformées à la même échelle linéaire de temps (E1', figure 7) pour tous les récepteurs dans le groupe présélectionné; corréler les formes d'onde de signal d'écho de tous les récepteurs dans ledit groupe présélectionné de récepteurs, de sorte que les formes d'onde de signal d'echo, obtenues à partir des échos de l'impulsion injectée venant de discontinuités le long de ladite ligne focale de référence, sont renforcées (E1'', figure 8); et répéter la transformation de temps et la corrélation de formes d'onde avec le même groupe de formes d'onde de signal d'écho par rapport à une ou plusieurs autres lignes focales de référence situées dans le plan de scrutation et espacées de ladite première ligne focale de référence mais parallèles à celle-ci; le dispositif étant tel que, en utilisation, des formes d'onde de signal d'écho renforcées par corrélation sont produites répétitivement et représentent les discontinuités sur chaque ligne focale de référence prise successivement par avance progressive d'une ligne focale de référence à la suivante dans le plan de scrutation.

2. Procédé suivant la revendication 1, comprenant l'utilisation des formes d'onde de signal d'écho renforcées par corrélation, représentant les discontinuités sur les lignes focales de référence, pour moduler l'intensité d'un tube à rayons cathodiques à balayage de trame de manière à visualiser, sur des lignes de balayage correspondantes de l'écran du tube cathodique fonctionnant en synchronisme avec l'appareil de formation d'image ultrasonore, les positions des dites discontinuités à l'intérieur du corps en examen.

3. Procédé suivant la revendication 1 ou la revendication 2, dans lequel une transformation de temps sur une forme d'onde de signal d'écho comprend l'opération d'avance de l'ensemble de la forme d'onde par rapport au temps, d'une quantité correspondant au retard initial dû seulement au décalage du transducteur qui engendre la forme d'onde par rapport à la ligne focale choisie.

4. Appareil de scrutation par ultrasons pour l'utilisation dans la production d'une image en coupe d'un corps, comprenant un ensemble linéaire (1) de sondes ultrasonores comportant chacune un injecteur de sonde (T1; T2; ...) capable d'injecter des impulsions dans un corps hétérogène et un récepteur de sonde (RA1, RB1; RA2, RB2, ...) capable de détecter des échos provenant de discontinuités à l'intérieur du corps, caractérisé par des moyens (10, 13, 14) pour activer cycliquement et séquentiellement des injecteurs de sonde adjacents successifs (T1; T2; ...) chacun de manière à injecter à son tour une impulsion unique dans un corps en examen afin de produire en combinaison une séquence répétitive d'impulsions situées sensiblement dans un même plan de scrutation; des moyens (3, 13, 15), suivant l'injection de chaque impulsion d'un injecteur individuel (par exemple T3), pour établir un groupe de formes d'onde de signal d'écho à partir de tous les échos détectés par un groupe de récepteurs de sonde (par exemple RA1, RB1; RA4, RB4; RA7, RB7) présélectionnés pour être associés avec cet injecteur de sonde; des moyens (13, 20, 21, 22, 26, 42) pour exécuter des opérations de transformation de temps sur ledit groupe de formes d'onde de signal d'écho par rapport à une première ligne focale de référence dans le corps, située dans le plan de scrutation le long ou parallèlement à l'axe longitudinal de l'injecteur, de sorte que les formes d'onde de signal d'écho dans le groupe, qui sont établies à partir des échos de l'impulsion injectée provenant de discontinuités à l'intérieur du corps le long de ladite première ligne focale de référence, sont transformées à la même échelle linéaire de temps pour tous les récepteurs dans le groupe présélectionné; des moyens (32, 34) pour effectuer la corrélation des formes d'onde de signal d'écho provenant de tous les récepteurs du groupe présélectionné de récepteurs, de sorte que les formes d'onde de signal d'écho, qui sont établies à partir des échos de l'impulsion injectée venant des discontinuités le long de ladite ligne focale de référence, sont renforcées; et des moyens (26) provoquant la répétition de la transformation de temps et de la corrélation de formes d'onde avec le même groupe de formes d'onde signal d'écho, par rapport à une ou plusieurs autres lignes focales de référence situées dans le plan de scrutation et espacées de ladite première ligne focale de référence mais parallèles à celle-ci.

5. Appareil de scrutation ultrasonore suivant la revendication 4, comprenant des moyens de chargement en parallèle des signaux d'écho individuels dans la forme d'onde de signal d'écho pour chaque sonde dans ledit groupe sélectionné de récepteurs de sonde, tels qu'ils sont engendrés, dans des emplacements disponibles successifs d'une mémoire vive associée (21) adressée séquentiellement et qui fonctionne sous la commande de moyens d'adresse (22) à une première cadence prédéterminée, des moyens de lecture en parallèle des signaux d'écho dans la mémoire, sous la commande desdits moyens d'adresse fonctionnant à une deuxième cadence prédéterminée, la relation entre la première et la deuxième cadences étant choisie en fonction de la transformation de temps à exécuter sur la forme d'onde de signal d'écho emmagasinée.

6. Appareil de scrutation ultrasonore suivant la revendication 5, dans lequel chaque mémoire vive associée est adressée séquentiellement au moyen d'un compteur d'adresse (22.1, 22.2) qui, lorsqu'il est déclenché, avance à travers chaque emplacement de mémoire disponible de sa mémoire vive associée (21.1; 21.2) successivement à ladite première ou à ladite deuxième cadences prédéterminées.

7. Appareil de scrutation ultrasonore suivant la revendication 6, dans lequel les formes d'onde de signal d'écho sont chargées en mémoire à une cadence constante Fw et lues à une cadence variable Fr, dans lequel la cadence de lecture variable de chaque forme d'onde de signal en mémoire est une fonction de la distance d de la sonde détectant les échos représentés par la forme d'onde à la ligne focale choisie et de la distance x des discontinuités à l'intérieur de corps qui engendrent les signaux d'écho pour l'ensemble, donnée par l'expression:

$$Fr = \tfrac{1}{2}Fw(1 + (1 + (d/x)^2)^{-1/2})$$

et dans lequel, avant la lecture d'une mémoire vive, le compteur d'adresse associé est préchargé avec une valeur prédéterminée pour décaler le contenu de la mémoire d'une quantité telle que les emplacements qui contiennent cette partie de la forme d'onde de signal d'écho représentant le retard initial dû seulement au décalage physique de la sonde associée par rapport à la ligne focale choisie, sont exclus de la lecture.

8. Appareil de scrutation ultrasonore suivant les revendications 5, 6 ou 7, dans lequel les dites formes d'onde de signal d'écho, provenant d'un groupe choisi de sondes et résultant d'impulsions successives injectées dans le corps, sont emmagasinées alternativement dans l'un ou l'autre de deux groupes correspondants de mémoires vives, le dispositif étant tel que, pendant la période dans laquelle les formes d'onde de signal d'écho précédemment emmagasinées après l'injection d'une impulsion dans le corps sont lues dans un groupe de mémoire vive, les formes d'onde de signal d'écho résultant de l'injection de l'impulsion suivante dans le corps sont emmagasinées dans l'autre groupe de mémoire vive.

9. Appareil de scrutation ultrasonore suivant la revendication 5, 6, 7 ou 8, dans lequel les dits moyens de corrélation des formes d'onde de signal d'écho de tous les récepteurs dans le groupe présélectionné de récepteurs comprennent un multiplicateur (34) servant à recevoir et à multiplier ensemble les signaux de sortie de la mémoire vive lorsqu'ils sont lus à ladite deuxième cadence prédéterminée, et ledit appareil comprenant en outre des moyens de commande (37, 39) pour engendrer des signaux de commande de balayage de manière à piloter un tube à rayons cathodiques (36) à balayage de trame en synchronisme avec les dits moyens d'adresse, et des moyens (35) pour envoyer les signaux de sortie dudit multiplicateur, représentant les discontinuités sur lesdites lignes focales de référence, audit tube cathodique afin de moduler l'intensité du faisceau de balayage, de sorte qu'on visualise, sur les lignes de balayage correspondantes du tube cathodique, les emplacements desdites discontinuités à l'intérieur du corps en examen.

10. Appareil de scrutation ultrasonore suivant l'une quelconque des revendications 4 à 9, dans lequel chaque sonde comprend un injecteur ultrasonore (par exemple T1) qui fonctionne pour transmettre une impulsion d'ultrason le long d'un axe prédéterminé et une paire de récepteurs ultrasonores (par exemple RA1, RB1) situés un de chaque côté de l'axe, à égale distance de celui-ci et dans un plan perpendiculaire à l'axe, la sortie des récepteurs étant reliée à des entrées respectives d'un multiplicateur de signal (3.1), lesdites formes d'onde de signal d'écho engendrées par chaque sonde étant obtenues à partir de la sortie du multiplicateur de signal associé.

FIG. 1

FIG. 2

FIG. 3

FIG. 4

(a)

(b)

(c)

TIME

0 068 052

2

FIG. 5

FIG. 6

FIG. 7

FIG. 8

FIG. 9

FIG.10

0 068 052

FIG. 11

0 068 052

FIG. 12

FIG.13